# FASCICULE DE BREVET EUROPEEN

(11) **EP 3 063 450 B1**
(45) Date de publication et mention de la délivrance du brevet: **06.05.2020**
(21) Numéro de dépôt: 14825170.5
(22) Date de dépôt: 24.10.2014
(51) Int. Cl.: F16L 45/00, A62C 2/06, F24F 13/02

(54) **TRAPPE DE VISITE COUPE-FEU POUR CONDUIT**
BRANDSCHUTZTÜR FÜR EINEN KANAL
FIRE-RATED ACCESS DOOR FOR DUCT

(30) Priorité: 28.10.2013 FR 1360505
(43) Date de publication de la demande: 07.09.2016
(73) Titulaire: Servanin, Xavier, 69160 Tassin-la-demi-lune (FR)
(72) Inventeur: Servanin, Xavier, 69160 Tassin-la-demi-lune (FR)
(74) Mandataire: Potdevin, Emmanuel Eric
(86) Numéro de dépôt international: PCT/FR2014/052714
(87) Numéro de publication internationale: WO 2015/063398

(56) Documents cités:
- EP-A1- 0 379 189
- DE-A1- 19 746 725
- US-A1- 2010 180 509
- US-B1- 6 505 441

## Description

L'invention concerne les trappes de visite pour conduit. Une telle trappe peut être montée sur une gaine de conduit, notamment aéraulique, ou encore, sur un conduit destiné à transporter des gaz contenant éventuellement des particules solides ou liquides.

Afin de pouvoir effectuer des tâches d'inspection ou de maintenance à l'intérieur de ces conduits, il est nécessaire d'y installer une ou plusieurs trappes de visite. La trappe permet d'accéder à l'intérieur du conduit lorsque celle-ci est en position ouverte, et d'assurer l'étanchéité du conduit lorsqu'elle est en position fermée.

On connaît d'après le document AU-4 861 390 une trappe de visite qui comprend deux parois concentriques et approximativement parallèles. L'espace entre ces deux parois est réglé par un ou plusieurs boutons de serrage. Les parois sont en métal. Grâce aux boutons de serrage, il est possible d'éloigner les deux parois l'une de l'autre et donc de les retirer afin d'accéder à l'intérieur du conduit.

Néanmoins, une telle trappe de visite n'assure pas une isolation coupe-feu entre l'extérieur et l'intérieur du conduit. Les deux parois métalliques ne suffisent pas pour assurer que la trappe de visite est coupe-feu. Ainsi, en cas d'incendie dans le conduit, le feu augmente la température au voisinage de la plaque et ainsi l'incendie peut se propager à l'extérieur du conduit. De même, en cas d'incendie à l'extérieur du conduit, le feu peut gagner l'intérieur de celui-ci.

En outre, les conduits sont susceptibles de propager rapidement l'incendie d'une extrémité à l'autre d'un immeuble où ils seraient installés par exemple.

D'après le document DE-197 46 725 on connaît une trappe de visite coupe-feu comprenant une paroi d'obturation et un panneau coupe-feu comprenant un matériau composite, le panneau étant fixé à la paroi par des boulons.

Un but de l'invention est donc de proposer une trappe de visite coupe-feu pour conduit de sorte que le conduit conserve ses propriétés coupe-feu après la pose de la trappe.

Pour ce faire, on prévoit selon l'invention une trappe de visite coupe-feu pour conduit selon la revendication 1.

Ainsi, en cas d'incendie dans ou hors du conduit, le feu ne peut pas s'étendre rapidement de part et d'autre du conduit. Par panneau coupe-feu, on désigne notamment un panneau capable de maintenir, pendant une durée pouvant atteindre 120 minutes, une barrière au feu lors d'un incendie dont la température s'élève à 1200°C. En outre, l'invention est adaptable sur une trappe existante pour la rendre coupe-feu.

Selon un mode de réalisation, la trappe est configurée pour un conduit de transport de fluide comportant une phase principale gazeuse.

Un tel conduit est particulièrement susceptible de propager un incendie. La trappe est donc un moyen adapté pour maintenir une barrière au feu entre l'intérieur et l'extérieur du conduit tout en permettant l'inspection de celui-ci.

De préférence, la trappe est configurée pour un conduit aéraulique.

Ce type de conduit est répandu dans des bâtiments tels que les bureaux ou les parkings. La trappe est alors avantageuse pour la sécurité des individus.

Selon un mode de réalisation, la trappe est configurée pour un conduit comprenant au moins un câble de télécommunication ou de transport d'énergie.

Un incident sur l'un de ces conduits a souvent des répercussions importantes sur l'ensemble d'un réseau. La trappe protège alors ces conduits de la propagation d'un incendie et en permet l'inspection.

Avantageusement, le matériau composite comporte une matrice en ciment.

Une telle matrice renforce le panneau vis-à-vis des contraintes mécaniques qu'il peut subir tout en participant aux propriétés coupe-feu du panneau.

Selon un mode de réalisation, le matériau composite comprend un renfort en silicate de calcium.

Ce matériau présente de très bonnes propriétés coupe-feu.

Selon l'invention, la trappe comporte une paroi d'obturation, le panneau étant fixé à la paroi par des moyens de fixation amovible, par exemple par au moins un assemblage par vissage.

Selon l'invention, les moyens de fixation amovible comprennent le même matériau que le panneau.

Les moyens de fixation présentent donc également des propriétés coupe-feu.

Selon un mode de réalisation, la trappe comprend des moyens de fixation de la trappe au conduit comportant au moins un assemblage par vissage.

Avantageusement, la trappe comprend un joint intumescent.

Ainsi, en cas d'incendie, le joint voit son volume gonfler et l'isolation thermique est renforcée.

Avantageusement, le joint est agencé pour être interposé entre le panneau et le conduit et de préférence en contact direct avec ceux-ci.

Cet agencement renforce l'isolation thermique en cas d'incendie.

Selon un mode de réalisation, au moins une face de la trappe, par exemple une face d'une paroi d'obturation distincte du panneau, porte un revêtement destiné à améliorer la tenue au feu de la trappe.

Un tel revêtement est un moyen économique pour améliorer encore la tenue au feu de la trappe.

Selon un mode de réalisation, la trappe est agencée pour être positionnée sur une partie de conduit à section circulaire.

De préférence, le nombre de panneaux coupe-feu est au moins égal à deux, les panneaux étant superposés l'un sur l'autre.

La tenue au feu de la trappe est ainsi meilleure.

Avantageusement, la trappe comprend des moyens de fixation des panneaux l'un à l'autre et des moyens de fixation de la trappe au conduit indépendants des moyens de fixation des panneaux l'un à l'autre.

En conséquence, ces moyens de fixation ne forment pas de pont thermique entre l'intérieur et l'extérieur du conduit.

Avantageusement, la trappe comprend des moyens de fixation amovible des panneaux l'un à l'autre.

Ainsi, l'accès à la trappe de visite est simplifié.

De préférence, l'un des panneaux recouvre des moyens de fixation de la trappe au conduit.

Ces moyens de fixation ne peuvent donc pas former de pont thermique entre l'intérieur et l'extérieur du conduit.

En outre, on prévoit selon l'invention un procédé d'isolation coupe-feu d'une ouverture d'un conduit selon la revendication 11.

On va maintenant décrire, à titre d'exemples non limitatifs, des modes de réalisation de l'invention en se référant aux figures suivantes :
- la figure 1 est une vue en coupe parallèle à l'axe longitudinal d'un conduit d'une trappe de visite selon un premier mode de réalisation, qui n'est pas selon l'invention, positionnée sur l'ouverture d'un conduit rectangulaire ;
- la figure 2 est une vue en coupe perpendiculaire à l'axe longitudinal du conduit d'une trappe de visite selon un deuxième mode de réalisation, qui n'est pas selon l'invention, positionnée sur l'ouverture d'une partie circulaire d'un conduit ;
- la figure 3 est vue de dessus de la trappe de visite selon un troisième mode de réalisation, qui est selon l'invention ;
- la figure 4 est une vue en coupe parallèle à l'axe longitudinal du conduit d'une trappe selon ce mode de réalisation ; et
- la figure 5 est une vue en coupe perpendiculaire à l'axe longitudinal du conduit d'une trappe selon un quatrième mode de réalisation, qui est selon l'invention.

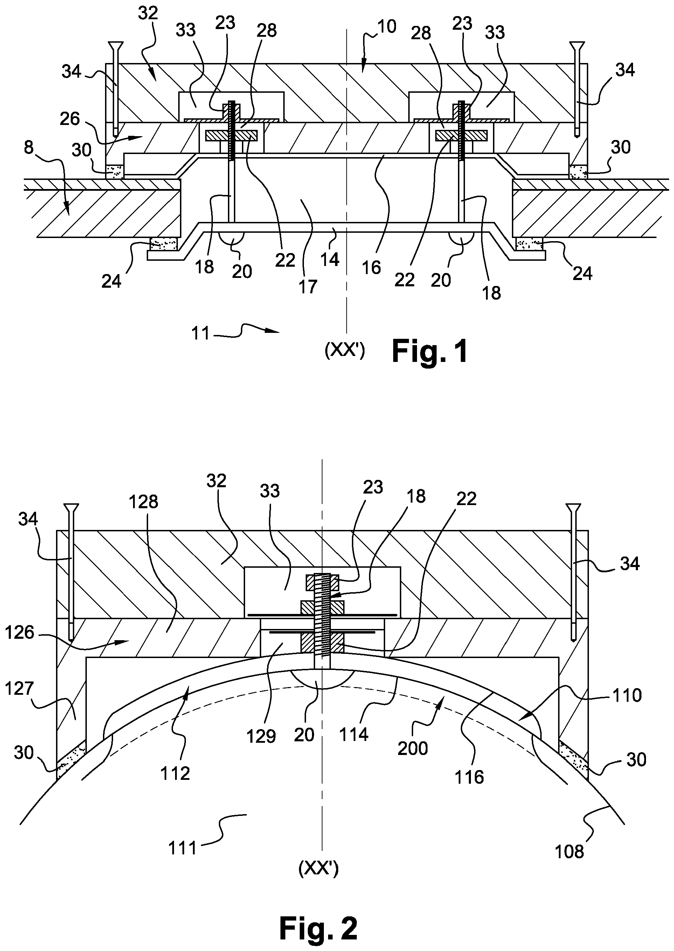

On a illustré à la figure 1 une vue en coupe d'une trappe de visite 10 avec protection coupe-feu, selon un premier mode de réalisation, positionnée sur une ouverture latérale ménagée dans une paroi d'un conduit rectangulaire 8. L'espace 11 désigne la partie interne du conduit. C'est dans cet espace que circule le fluide transporté dans le conduit. Dans cet exemple, il s'agit d'un conduit aéraulique et le fluide est de l'air. Néanmoins, le fluide transporté pourrait aussi bien être un gaz réfrigérant, de la fumée ou un brouillard comportant des particules liquides. La trappe de visite selon ce premier mode de réalisation peut donc être utilisée pour des conduits transportant tous les types de fluide comportant une phase principale gazeuse, notamment de l'air comprenant éventuellement des particules solides ou liquides. Plus généralement, le conduit pourrait tout aussi bien être un conduit de câbles. Il peut s'agir par exemple d'une gaine technique servant de logement pour des câbles électriques ou de télécommunications. La trappe de visite 10 comprend deux parois intérieure 14 et extérieure 16. Ces deux parois 14 et 16 sont circulaires, planes, parallèles et présentent un axe de symétrie commun (XX'). Distantes l'une de l'autre, elles ménagent entre elles un intervalle d'air qui assure une certaine isolation thermique. En outre, les parois sont ici en acier galvanisé. Selon une variante de ce mode de réalisation, elles sont en acier inoxydable.

Deux vis de fixation 18 en acier s'étendent de l'une à l'autre des parois 14 et 16 à travers deux ouvertures conçues à cet effet. Les vis permettent de régler la distance entre les parois 14 et 16. Chaque vis 18 a sa tête 20 en butée contre la face interne de la paroi 14 et porte un écrou 22 en butée contre la face externe de l'autre paroi, ce qui permet par rotation de rapprocher ou d'éloigner les deux parois l'une de l'autre. Ainsi, l'ensemble composé des vis et des écrous constitue des moyens de fixation de la trappe au conduit. La paroi du conduit est prise en sandwich et serrée entre les parois 14 et 16.

Un joint d'étanchéité haute température 24 est positionné entre la face externe du bord de la paroi intérieure 14 et la face interne du bord intérieur de l'ouverture du conduit 8 en étant en contact direct avec ceux-ci. Ce joint d'étanchéité, en laine de roche ou en céramique, renforce l'étanchéité de la paroi 14 et peut supporter la hausse de température engendrée par un incendie sans se détériorer. Ainsi, le joint assure l'étanchéité entre l'intervalle 17 et l'intérieur du conduit même en cas d'incendie.

Un premier panneau plat sensiblement circulaire 26 est fixé sur la paroi 16. Le panneau 26 a un diamètre supérieur à celui de la paroi 16 et possède le même axe de symétrie (XX'). Le panneau 26 présente deux logements traversants 28 pour réception des moyens de fixation 18. Ces logements permettent de maintenir un espace d'air entre les écrous 22 et le panneau de sorte que les transferts thermiques entre ces deux éléments soient limités.

Le panneau 26 a ici été produit à partir d'une plaque commercialisée par la société Promat sous le nom Promatech-H®. Ce panneau est en matériau composite formé d'une matrice en ciment et d'un renfort en silicate de calcium. Cet ensemble composite présente une bonne tenue au feu. Ainsi, l'isolation thermique entre l'intérieur et l'extérieur du conduit 8 est assurée en cas d'incendie dont la température s'élève à 1200°C pendant une durée pouvant atteindre 120 minutes. Selon des variantes de ce mode de réalisation, le panneau 26 est issu d'une plaque Promatech-L® ou Promatech-L500® également commercialisées par Promat ou encore d'un autre matériau composite à matrice en ciment et à renfort en silicate de calcium. Selon une autre variante, le panneau 26 est produit à partir d'un autre type de matériau composite.

Le panneau 26 offre ainsi une protection en cas d'incendie et constitue une deuxième cloison coupe-feu après l'intervalle 17 compris entre les deux parois 14 et 16.

Un joint intumescent 30 est positionné entre la face interne du bord du panneau 26 et la face externe du conduit 8, de sorte que le joint intumescent soit au contact direct du panneau et du conduit. Le joint intumescent 30 a la propriété de gagner un volume équivalent à 20 fois son volume initial en cas de montée en température causée par exemple par un incendie. Cette expansion a pour effet de renforcer l'isolation thermique du conduit vis-à-vis de l'extérieur.

En outre, un écrou avec rondelle 23 est positionné sur la vis 18 pour la fixation rigide du premier panneau 26 aux parois 14 et 16, la rondelle venant en appui contre une face externe du panneau.

Un deuxième panneau 32 sensiblement de même diamètre que le premier mais plus épais est positionné sur ce dernier et superposé à lui. Selon des variantes de ce mode de réalisation, ce deuxième panneau a la même épaisseur ou est moins épais que le premier. Il comprend ici le même matériau que le panneau 26. Il possède lui aussi deux parties creuses 33 recevant les vis 18 et assurant une bonne isolation thermique vis-à-vis de celles-ci. Néanmoins, ces parties creuses 33 ne traversent pas le panneau 32 selon un axe (XX') perpendiculaire à l'axe longitudinal du conduit et sont ménagées seulement dans sa face interne. Ce panneau conserve donc ses propriétés coupe-feu.

Le maintien rigide en position des deux panneaux 26 et 32 l'un à l'autre s'effectue ici au moyen de deux vis 34 situées à deux bords opposés des panneaux. Les vis 34 s'étendent parallèlement à l'axe (XX') dans les deux panneaux. Chaque vis traverse toute l'épaisseur du deuxième panneau 32. Une extrémité de la vis s'étend dans le panneau 26. Ces vis sont en outre isolées thermiquement des vis 18 afin de ne pas produire de pont thermique entre l'intérieur et l'extérieur du conduit. En effet, en cas d'incendie à l'intérieur du conduit, les vis 18 forment un pont thermique entre l'intérieur du conduit et le panneau 26. Comme celles-ci sont isolées des vis 34, peu de chaleur va alors être diffusé vers l'extérieur du conduit par les vis 34 qui forment également un pont thermique entre les panneaux et l'extérieur du conduit. Le même raisonnement s'applique au cas où un incendie se produirait à l'extérieur du conduit. Ainsi, les moyens de fixation rigide 34 des panneaux 26 et 32 l'un à l'autre sont indépendants et distants des moyens de fixation rigide 18 du panneau 26 aux parois 14 et 16. Et aucun de ces moyens n'est en contact avec le conduit.

On va maintenant décrire le procédé d'isolation coupe-feu de l'ouverture du conduit 8 par la trappe de visite coupe-feu 10.

Dans une première étape, on installe le joint d'étanchéité 24 sur les bords de la paroi intérieure 14. Les moyens de fixation sont à ce moment desserrés au maximum. **Selon une variante du procédé, la paroi 14 comprend initialement le joint d'étanchéité 24 et l'opérateur ne procède pas à cette étape.**

Ensuite, celui-ci positionne l'ensemble formé des deux parois sur l'ouverture du conduit 8 de sorte que le joint d'étanchéité 24 soit en contact avec les bords intérieurs de l'ouverture. L'opérateur fixe rigidement les parois 14 et 16 sur l'ouverture au moyen des écrous 22 qu'il serre afin d'assurer une étanchéité maximale entre l'intérieur et l'extérieur du conduit 8. Les deux parois prennent en sandwich la paroi du conduit 8 interposée entre elles.

Puis on place le premier panneau 26 sur la paroi extérieure 16 de manière à ce que la partie supérieure des vis 18 et les écrous 22 ne soient pas en contact directement avec le panneau. Pour ce faire, on s'assure que les parties creuses 28 sont positionnées autour des écrous 22. En outre, l'opérateur s'assure que le joint intumescent 30 est logé entre une partie du panneau et le conduit 8 de sorte que le joint soit en contact direct avec ceux-ci. On fixe rigidement le panneau 26 en serrant les écrous 23.

Puis on place le deuxième panneau 32 sur le panneau 26 de sorte que la partie supérieure des vis 18 ne soit pas en contact avec le panneau 32.

Enfin, l'opérateur assure le maintien en position rigide des panneaux 26 et 32 au moyen des vis 34. Il passe les vis 34 à travers les orifices des panneaux 26 et 32 prévus à cet effet puis les serre.

Une fois ainsi positionnée sur le conduit, la trappe assure une étanchéité semblable à celle des parois du conduit entre l'intérieur et l'extérieur du conduit. En cas de besoin d'inspection ou de réparation, l'opérateur desserre les vis 34, extrait le panneau 32, desserre les écrous 23, extrait le panneau 26, desserre les écrous 22, et enlève les parois 14 et 16. Il peut ainsi accéder à l'intérieur du conduit 8.

On va maintenant décrire le comportement de la trappe de visite 10 en cas d'incendie à l'intérieur du conduit.

Un incendie se produisant à l'intérieur du conduit y augmente sensiblement la température. Grâce au joint haute température 24 qui possède une bonne tenue au feu, à l'air situé dans l'intervalle 17 entre les deux parois 14 et 16 et à ces deux parois, peu de chaleur est transféré vers l'extérieur du conduit à travers la paroi 16. Seules les vis 18 constituent un pont thermique vers l'extérieur du conduit. Néanmoins, grâce à l'air situé entre les vis 18 et les panneaux 26 et 32, et la constitution de ces panneaux en matériau composite Promatech-H®, une faible proportion de la chaleur issue des vis 18 diffuse vers l'extérieur des panneaux. De même, au cas où la température est trop importante au niveau de la paroi extérieure 16, le joint intumescent 30 voit son volume croître jusqu'à 20 fois son volume initial pour renforcer l'isolation thermique entre l'extérieur et l'intérieur du conduit.

On va maintenant décrire, en référence à la figure 2, une trappe 110 selon un deuxième mode de réalisation. Seules les différences avec le premier mode vont être présentées.

Le conduit 108 présente ici une partie à section transversale circulaire. En effet, les gaines de conduits usuelles peuvent aussi bien être à section transversale circulaire ou rectangulaire. L'espace 111 définit l'intérieur du conduit 108. On retrouve un ensemble 112 de deux parois 114 et 116 semblables à celles décrites dans le premier mode de réalisation mais courbées de sorte qu'il peut obturer l'ouverture de la partie circulaire du conduit 108. Comme dans le premier mode de réalisation, deux vis 18 alignées parallèlement à la direction de l'axe longitudinal du conduit, s'étendant selon l'axe (XX'), semblables à celles décrites précédemment, permettent le maintien en position de l'ensemble 112. Une vis 18 est maintenue contre l'ensemble 112 au moyen d'une tête de vis 20. De plus, en l'espèce, un revêtement 200, destiné à renforcer la tenue au feu, est porté par la face interne de l'ensemble 112. Le revêtement ignifuge est par exemple déposé par flocage ou par projection.

Sur l'ensemble 112, est positionné un premier panneau 126 plat, circulaire et de diamètre tel qu'il s'étend par-delà l'ensemble 112. En son centre, il présente deux ouvertures traversantes 129, alignées parallèlement à la direction de l'axe longitudinal du conduit, adaptées pour le passage des vis de fixation 18. En outre, le panneau 126 possède une jupe 127 s'étendant en saillie de la face interne en direction du conduit et en butée sur le joint intumescent 30 en contact direct avec le conduit 108. Ainsi, au moyen de la jupe 127, le panneau 126 est adapté pour être positionné sur une partie de conduit circulaire.

La trappe comprend, sur le premier panneau 126, un deuxième panneau 32 semblable à celui décrit dans le premier mode de réalisation. Comme dans ce premier mode, deux vis 34 assurent le maintien rigide en position du panneau 32 sur le panneau 126.

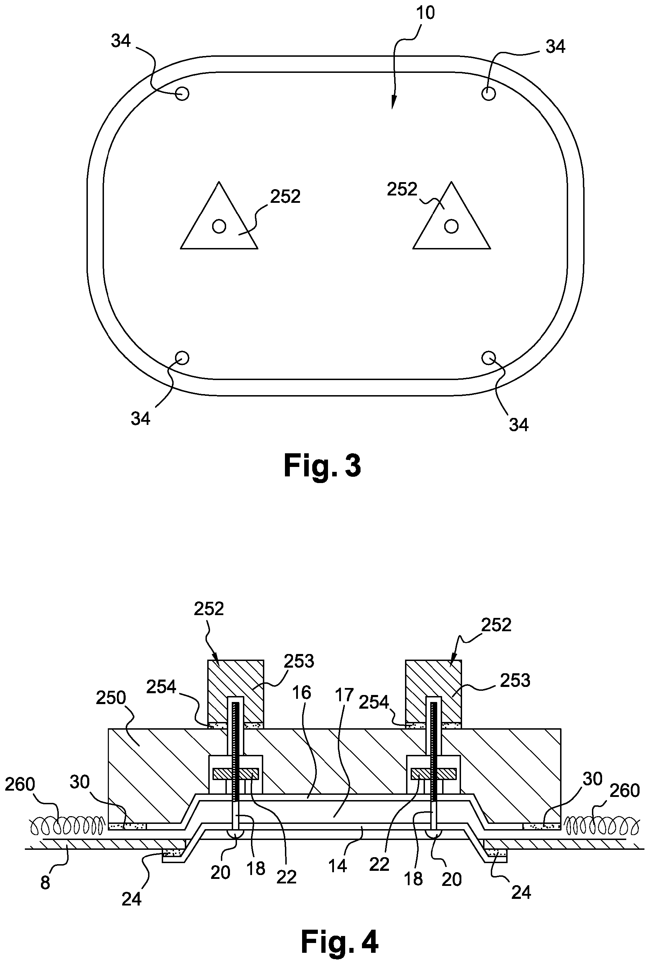

On va maintenant décrire en référence aux figures 3 et 4 un troisième mode de réalisation qui est selon l'invention. A nouveau, seules les différences avec le premier mode de réalisation vont être présentées.

Vue de dessus, la trappe 10 a une forme sensiblement rectangulaire présentant des coins arrondis. Cette forme n'est pas limitative et, selon des variantes, la trappe a une forme sensiblement rectangulaire avec des coins formant des angles droits, une forme carrée ou encore une forme sensiblement circulaire.

Les deux panneaux 26 et 32 du premier mode sont ici remplacés par un unique panneau 250. La trappe comprend donc un seul panneau 250 positionné sur la face externe de la paroi 16.

De part et d'autre de la trappe, en contact latéral avec le joint intumescent 30, un revêtement ignifuge 260 s'étend sur la face externe du conduit rectangulaire 8 et limite les transferts thermiques entre la trappe et l'extérieur du conduit.

Deux boutons de serrage externes 252 assurent le maintien en position rigide du panneau 250 sur la paroi 16. Ces deux boutons recouvrent l'extrémité des vis 18 s'étendant au-delà du panneau 250. Chaque bouton 252 comprend une partie principale 253 comportant le même matériau composite que le panneau 250. En outre, le bouton comprend un joint intumescent 254 situé à sa base, en contact avec le panneau 250. Ainsi, en cas d'incendie et d'augmentation de la température au niveau du joint, celui-ci gagne un volume plus important et renforce l'isolation thermique de la vis 18 vis-à-vis de l'extérieur de la trappe.

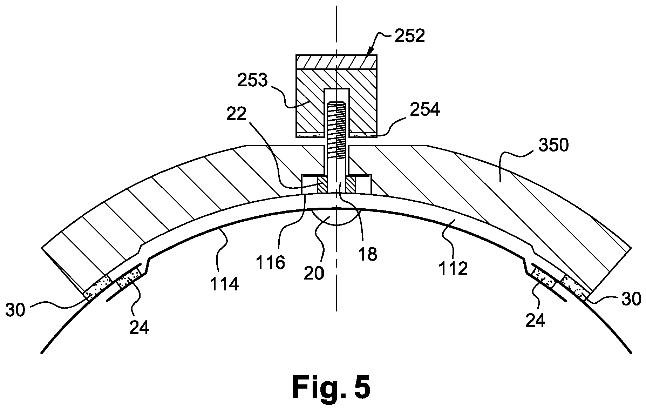

On a illustré à la figure 5 un quatrième mode de réalisation qui est selon l'invention. Seules les différences avec le précédent mode vont être évoquées.

Comme dans le précédent mode, la trappe comprend un unique panneau 350. De plus, il est cette fois adapté pour être positionné sur une ouverture d'une partie de paroi circulaire du conduit. Comme dans le deuxième mode de réalisation, la trappe comprend un ensemble 112 de deux parois 114 et 116, adapté pour être positionné sur l'ouverture circulaire du conduit. Les deux boutons de serrage 252, comprenant à nouveau le même matériau composite que le panneau 350, sont ici illustrés en position desserrée avant montage, comme en témoigne l'espace entre le joint intumescent 254 et le panneau 350.

Bien entendu, on pourra apporter à l'invention de nombreuses modifications sans sortir du cadre de celle-ci.

## Revendications

1. Trappe de visite coupe-feu (10 ; 110) pour conduit (8 ; 108) comprenant au moins un panneau coupe-feu (26, 32 ; 126 ; 250 ; 350) comprenant une couche de matériau composite, la trappe comprenant une paroi d'obturation (14, 16 ; 114, 116), le panneau étant fixé à la paroi par des moyens de fixation amovible, par exemple par au moins un assemblage par vissage (18, 20, 22, 23, 28), **caractérisé en ce que** les moyens de fixation amovible (252) comprennent le même matériau que le panneau (250, 350).

2. Trappe (10 ; 110) selon la revendication précédente, configurée pour un conduit de transport de fluide comportant une phase principale gazeuse.

3. Trappe (10 ; 110) selon au moins l'une quelconque des revendications précédentes, configurée pour un conduit aéraulique.

4. Trappe (10 ; 110) selon au moins l'une quelconque des revendications précédentes, configurée pour un conduit comprenant au moins un câble de télécommunication ou de transport d'énergie.

5. Trappe (10 ; 110) selon au moins l'une quelconque des revendications précédentes, dans laquelle le matériau composite comporte une matrice en ciment.

6. Trappe (10 ; 110) selon au moins l'une quelconque des revendications précédentes, dans laquelle le matériau composite comprend un renfort en silicate de calcium.

7. Trappe (10 ; 110) selon au moins l'une quelconque des revendications précédentes, qui comprend un joint intumescent (30), le joint étant agencé avantageusement pour être interposé entre le panneau (26 ; 126 ; 250 ; 350) et le conduit (8 ; 108) et de préférence en contact direct avec ceux-ci.

8. Trappe (10 ; 110) selon au moins l'une quelconque des revendications précédentes, dans laquelle au moins une face de la trappe, par exemple une face d'une paroi d'obturation (112) distincte du panneau, porte un revêtement (200) destiné à améliorer la tenue au feu de la trappe.

9. Trappe (10 ; 110) selon au moins l'une quelconque des revendications précédentes, dans laquelle le nombre de panneaux coupe-feu (26, 32 ; 126) est au moins égal à deux, les panneaux étant superposés l'un sur l'autre, la trappe comprenant avantageusement des moyens de fixation (34) des panneaux (26, 32 ; 126) l'un à l'autre et des moyens de fixation (18, 22, 23) de la trappe au conduit indépendants des moyens de fixation des panneaux l'un à l'autre.

10. Trappe (10 ; 110) selon au moins l'une quelconque des revendications précédentes dans laquelle le panneau ou l'un des panneaux (32) recouvre des moyens de fixation de la trappe au conduit (18, 20, 22, 23, 28).

11. Procédé d'isolation coupe-feu d'une ouverture d'un conduit (8 ; 108), **caractérisé en ce qu'**on fixe au conduit au moins une trappe (10 ; 110) selon au moins l'une quelconque des revendications précédentes.

## Patentansprüche

1. Brandschutztür (10;110) für eine Leitung (8; 108), die mindestens eine feuerfeste Platte (26, 32; 126; 250; 350) aufweist, die eine Schicht aus Verbundmaterial aufweist, wobei die Brandschutztür eine Verschlusswand (14, 16; 114, 116) aufweist, wobei die Platte durch entfernbare Befestigungsmittel, beispielsweise durch mindestens eine Schraubverbindung (18, 20, 22, 23, 28), an der Wand befestigt ist, **dadurch gekennzeichnet ist, dass** die entfernbaren Befestigungsmittel aus dem gleichen Material wie die Platte (250, 350) bestehen.

2. Brandschutztür (10; 110) gemäß dem vorhergehenden Anspruch, konfiguriert für eine Fluidtransportleitung, die eine Hauptgasphase aufweist.

3. Brandschutztür (10; 110) gemäß mindestens einem der vorhergehenden Ansprüche, konfiguriert für einen Luftkanal.

4. Brandschutztür (10; 110) gemäß mindestens einem der vorhergehenden Ansprüche, die für eine Leitung konfiguriert ist, die mindestens ein Telekommunikations- oder Energietransportkabel aufweist.

5. Brandschutztür (10; 110) gemäß mindestens einem der vorhergehenden Ansprüche, bei der das Verbundmaterial eine Zementmatrix aufweist.

6. Brandschutztür (10; 110) gemäß mindestens einem der vorhergehenden Ansprüche, wobei das Verbundmaterial eine Calciumsilikatverstärkung aufweist.

7. Brandschutztür (10; 110) gemäß mindestens einem der vorhergehenden Ansprüche, welche eine intumeszierende Dichtung (30) aufweist, wobei die Dichtung vorteilhafterweise so angeordnet ist, dass sie zwischen der Platte (26; 126; 250; 350) und der Leitung (8; 108) angeordnet ist, und vorzugsweise in direktem Kontakt mit ihnen steht.

8. Brandschutztür (10; 110) gemäß mindestens einem der vorhergehenden Ansprüche, wobei mindestens eine Seite der Brandschutztür, beispielsweise eine von der Platte getrennte Seite einer Verschlusswand (112), eine Beschichtung (200) trägt, die dazu bestimmt ist, den Feuerwiderstand der Brandschutztür zu verbessern.

9. Brandschutztür (10; 110) gemäß mindestens einem der vorhergehenden Ansprüche, wobei die Anzahl der feuerfesten Platten (26, 32; 126) mindestens gleich zwei ist, wobei die Platten übereinander liegen, wobei die Brandschutztür vorteilhafterweise Mittel zum Befestigen (34) der Platten aneinander aufweist (26, 32; 126) und Mittel zum Befestigen (18, 22, 23) der Brandschutztür an dem Kanal unabhängig von den Mitteln zum Befestigen der Platten aneinander.

10. Brandschutztür (10; 110) gemäß mindestens einem der vorhergehenden Ansprüche, wobei die Platte oder eine der Platten (32) Mittel zum Befestigen der Brandschutztür an dem Kanal (18, 20, 22, 23, 28) abdeckt.

11. Verfahren zum feuerfesten Isolieren einer Öffnung eines Kanals (8; 108), **dadurch gekennzeichnet, dass** mindestens eine Brandschutztür (10; 110) gemäß mindestens einem der vorhergehenden Ansprüche an dem Kanal befestigt ist.

## Claims

1. A fire-rated access door (10; 110) for a duct (8; 108) comprising at least one fire-rated panel (26, 32; 126; 250; 350) comprising a layer of composite material, the door comprising a blocking wall (14, 16; 114; 116), the panel being attached to the wall by removable attachment means, for example by at least one screw connection (18, 20, 22, 23, 28), **characterized in that** the removable attachment means (252) comprise the same material as the panel (250, 350).

2. The door (10; 110) according to the preceding claim, configured for a fluid-conveying duct comprising a main gaseous phase.

3. The door (10; 110) according to at least any one of the preceding claims, configured for an air duct.

4. The door (10; 110) according to at least any one of the preceding claims, configured for a duct comprising at least one telecommunications or power transmission cable.

5. The door (10; 110) according to at least any one of the preceding claims, in which the composite material comprises a cement matrix.

6. The door (10; 110) according to at least any one of the preceding claims, in which the composite material comprises a calcium silicate reinforcement.

7. The door (10; 110) according to at least any one of the preceding claims, which comprises an intumescent joint (30), the joint being arranged advantageously for being positioned between the panel (26; 126; 250; 350) and the duct (8; 108) and preferably in direct contact with these.

8. The door (10; 110) according to at least any one of the preceding claims, in which at least one face of the door, for example a face of a blocking wall (112) separate from the panel, has a coating (200) for improving the fire-resistance of the door.

9. The door (10; 110) according to at least any one of the preceding claims, in which the number of fire-rated panels (26, 32; 126) is at least equal to two, the panels being superimposed one on top of the other, the door advantageously comprising means (34) for attaching the panels (26, 32; 126) to one another and means (18, 22, 23) for attaching the door to the duct that are separate from the means for attaching the panels to one another.

10. The door (10; 110) according to at least any one of the preceding claims, in which the panel or one of the panels (32) includes means for attaching the door to the duct (18, 20, 22, 23, 28).

11. A method for insulating an opening of a duct (8; 108) in a fire-rated manner, **characterized in that** at least one door (10; 110) is attached to the duct according to at least any one of the preceding claims.
